# EUROPÄISCHE PATENTANMELDUNG

(11) **EP 2 215 941 A1**
(43) Veröffentlichungstag der Anmeldung: **11.08.2010**
(21) Anmeldenummer: 10151125.1
(22) Anmeldetag: 19.01.2010
(51) Int. Cl.: A47J 31/44

(54) **Gerät zur Ausgabe von Getränken**

(30) Priorität: 06.02.2009 DE 202009001490 U
(71) Anmelder: MELITTA HAUSHALTSPRODUKTE GmbH & Co. Kommanditgesellschaft, 32427 Minden (DE)
(72) Erfinder: Aus der Fünten, Sandra, 33739, Bielefeld (DE); Aengenheyster, Gerald, 32427, Minden (DE); Krutemeyer, Nils, 32278, Kirchlengern (DE)
(74) Vertreter: Dantz, Jan Henning

(57) **Zusammenfassung**

Ein Gerät (1) zur Ausgabe von Getränken, insbesondere Kaffee, umfasst eine Brüheinheit (3), durch die heißes Wasser durch Extraktion durchleitbar ist und eine Getränkeausgabe (15), an der ein Behältnis (14) mit einem zubereiteten Getränk befüllbar ist, wobei eine Einrichtung (2) zum Zuführen von Eis in einen Sammelbehälter (9) vorgesehen ist und das gebrühte Getränk durch den Sammelbehälter (9) mit Eis zur Getränkeausgabe (15) durchleitbar ist.

## Beschreibung

Die vorliegende Erfindung betrifft ein Gerät zur Ausgabe von Getränken, insbesondere von Kaffee, mit einer Brüheinheit, durch die heißes Wasser zur Extraktion durchleitbar ist, und einer Getränkeausgabe, an der ein Behältnis mit einem zubereiteten Getränk befüllbar ist.

Aus der DE 22 43 882 ist ein Getränkeausgeber bekannt, bei dem ein Eisvorrat in einem Vorratsbehälter angeordnet ist, der über einen Eisausgeber eine vorbestimmte Eismenge pro Zeiteinheit ausgeben kann. Das Eis kann dann in einem Behälter mit dem Getränk vermischt werden. Bei dieser Art der Getränkeausgabe ist nachteilig, daß Feststoffe im Getränk zurückbleiben, was vom Benutzer als unangenehm empfunden wird. Zudem lösen sich Eisstücke nur langsam auf, so daß eine Kühlung lange dauert oder eine Überdosierung an Eis den Geschmack des Getränks vermindert.

Aus der DE 34 05 396 ist ein Extraktbereitungsgerät bekannt, bei dem zur Kühlung eines Getränks ein Kühlgefäß zwischen einer Filtervorrichtung und einer Kanne vorgesehen ist. Das Kühlen in einem zusätzlichen Kühlgefäß, das manuell befüllbar ist, ermöglicht zwar das Filtern von Feststoffpartikeln, allerdings ist die Dosierung der richtigen Eismenge schwer vorzunehmen, da abhängig von der Temperatur des gebrühten Kaffees, der Umgebungstemperatur und der Größe der Eiswürfel eine mehr oder weniger effektive Kühlung stattfinden kann.

Es ist daher Aufgabe der vorliegenden Erfindung, ein Gerät zur Ausgabe von Getränken zu schaffen, mit dem eine effektive Kühlung eines gebrühten Getränkes möglich ist und eine konstante Getränkequalität erreicht wird.

Diese Aufgabe wird mit einem Gerät zur Ausgabe von Getränken mit den Merkmalen des Anspruches 1 gelöst.

Erfindungsgemäß weist das Gerät zur Ausgabe von Getränken eine Einrichtung zum Zuführen von Eis in einem Sammelbehälter auf, wobei das gebrühte Getränk durch den Sammelbehälter mit Eis zur Getränkeausgabe durchleitbar ist. Die Einrichtung zum Zuführen von Eis kann dadurch das Eis in der gewünschten Menge dosieren, so daß je nach eingestellter Getränkemenge auch das Eis in der notwendigen Menge in den Sammelbehälter abgegeben werden kann. Zudem kann die Temperatur des ausgegebenen Getränks durch die zugegebene Menge an Eis vorbestimmt werden. Dies ermöglicht ein reproduzierbares Qualitätsergebnis des ausgegebenen Getränks, was insbesondere bei Kaffeevollautomaten oder anderen Getränkeausgabegeräten von Vorteil ist.

Gemäß einer bevorzugten Ausgestaltung der Erfindung weist der Sammelbehälter einen Auslaß auf, an dem ein verschließbares Ventil vorgesehen ist. Dadurch kann die Verweildauer des gebrühten Getränkes mit dem Eis in dem Sammelbehälter vorbestimmt werden. Es kann von Vorteil sein, wenn das gebrühte Getränk in den Sammelbehälter abgegeben wird und dort für einen Zeitraum zwischen 5 bis 30 Sekunden, vorzugsweise 10 bis 20 Sekunden, verweilt, bevor das abgekühlte Getränk in die Getränkeausgabe abgegeben wird. Dadurch wird vermieden, daß noch Feststoffpartikel in dem gekühlten Getränk vorhanden sind. Die Verweildauer kann dabei über eine Steuerung automatisch vorgegeben werden, insbesondere bei Auswahl eines bestimmten Programms zur Getränkezubereitung.

Um das Gerät besonders flexibel zu gestalten, wird das gebrühte Getränk von der Brüheinheit wahlweise direkt zur Getränkeausgabe oder über den Sammelbehälter durchgeleitet. Dadurch kann der Benutzer entscheiden, ob er ein gebrühtes Heißgetränk oder ein gekühltes Getränk zu sich nehmen will.

In einer weiteren Ausgestaltung der Erfindung weist die Einrichtung zum Zuführen von Eis Mittel zum Zerkleinern des Eises auf Denn große Eisstücke benötigen lange Zeit für eine Kühlung und lösen sich auch nur langsam auf. Um die Oberfläche des Eises zu vergrößern wird vorzugsweise ein Gerät zum Zertrümmern des Eiswürfels in kleine Eisstücke vorgesehen, so daß das Eis sich auch leichter in den Sammelbehälter dosieren lässt. Hierfür kann die Einrichtung zum Zuführen von Eis einen Behälter umfassen, in dem eine angetriebene Scheibe zum Zerkleinern von Eis angeordnet ist, die mit einer entsprechenden Schneide zusammen wirkt. Die Schneide kann dabei verstellbar ausgebildet sein, um die Größe der zerkleinerten Eisstücke einstellen zu können.

Vorzugsweise ist eine automatische Eisdosiereinrichtung an der Einrichtung zum Zuführen von Eis vorgesehen. Dann wird vermieden, daß eine zu große Menge an Eis in die Einrichtung zum Zuführen von Eis abgegeben wird, wobei nur die notwendige Menge an Eis durch die Eisdosiereinrichtung an die Einrichtung zum Zuführen von Eis abgegeben wird. Die Eisdosiereinrichtung kann beispielsweise einen Vorratsbehälter oder eine Aufnahmeeinrichtung für Eiswürfel umfassen, die eine automatische Abgabe von ein oder mehreren Eiswürfeln an die Einrichtung zum Zuführen von Eis ermöglicht.

In einer weiteren Ausgestaltung gibt die Einrichtung zum Zufügen von Eis das Eis wahlweise in den Sammelbehälter oder direkt in die Getränkeausgabe ab. Dadurch kann der Benutzer entscheiden, ob er in seinem Getränk Eis oder nur ein gekühltes Getränk vorfinden will.

In einer weiteren Ausgestaltung ist eine Steuerung an dem Gerät vorgesehen, mittels der verschiedene Programme zur automatischen Ausgabe von heißen oder kalten Getränken auswählbar sind. Ferner kann der Benutzer über die Steuerung auch einstellen, falls er lediglich zerkleinertes Eis an der Getränkeausgabe erhalten möchte. Zudem können auch Mittel zum Dosieren von Aromen, insbesondere Sirup, vorgesehen sein. Dadurch kann das Gerät eine Vielzahl von verschiedenen Getränken mit unterschiedlichen Temperaturen und Geschmacksrichtungen ausgeben.

Für eine effektive Kühlung kann der Sammelbehälter trichterförmig ausgebildet sein, so daß die Schwerkraft genutzt werden kann, um an der Ausgabe ein schaltbares Ventil vorzusehen. Dies vermeidet unnötige Pumpen, die gerade bei der Ausgabe von Getränken zu Problemen mit der Reinigung führen können. Ferner ist die Einrichtung zum Zufügen von Eis oberhalb des Sammelbehälters und der Sammelbehälter oberhalb der Getränkeausgabe angeordnet, so daß über die Schwerkraft die Getränkeausgabe im Rahmen des Herstellungsprozesses erfolgen kann.

Für eine leichte Reinigung des Sammelbehälters kann dieser aus dem Gerät entnehmbar angeordnet sein, beispielsweise kann er in einer herausnehmbaren Schublade angeordnet sein.

Die Erfindung wird nachfolgend anhand eines Ausführungsbeispieles mit Bezug auf die beigefügten Zeichnungen näher erläutert. Es zeigen:

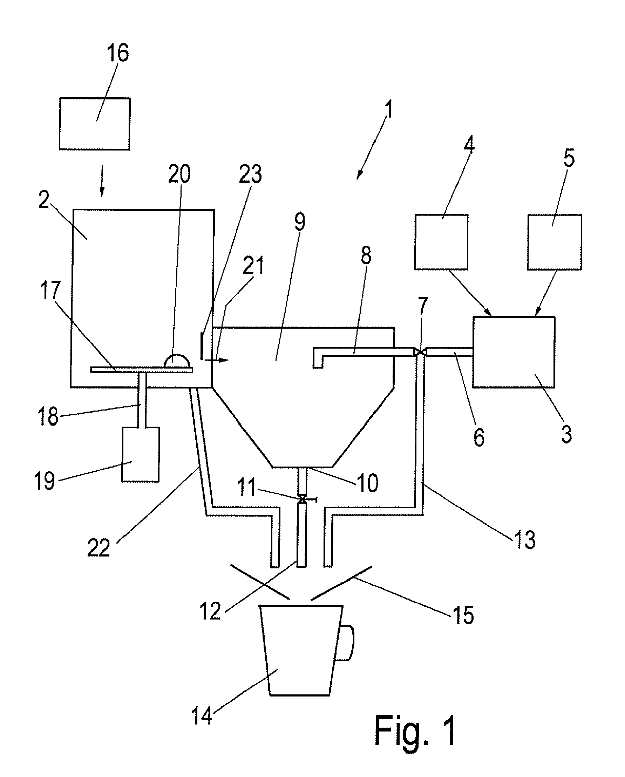

- Fig. 1: eine schematische Ansicht eines erfindungsgemäßen Gerätes zur Ausgabe von Getränken;
- Fig. 2: eine Detailansicht des Gerätes im Bereich der Einrichtung zum Zuführen von Eis; und
- Fig. 3: eine Explosionsdarstellung der Einrichtung zum Zuführen von Eis.

Ein Gerät 1 zur Ausgabe von Getränken, insbesondere von Kaffee, umfasst eine Einrichtung 2 zum Zuführen von Eis, die gemeinsam in dem Gerät 1 mit einer Brüheinheit 3 zum Herstellen eines Heißgetränks untergebracht ist. Die Brüheinheit 3 wird durch einen schematisch dargestellten Zulauf 4 für heißes Wasser und einer Dosiereinrichtung 5 für ein Extraktionsmittel, insbesondere Kaffee, versorgt. Der Kaffee kann dabei über ein Mahlwerk in der gewünschten Menge der Brüheinheit 3 zugeführt werden. Von der Brüheinheit 3 geht eine Ausgabeleitung 6 zu einer Abzweigung 7, die schaltbar ausgebildet ist und wahlweise das gebrühte Getränk durch eine Leitung 13 zu einer Getränkeausgabe 15 leitet oder in einen Zulauf 8 zu einem Sammelbehälter 9. Der Sammelbehälter 9 ist im unteren Bereich trichterförmig ausgebildet und umfasst an einem Auslaß 10 ein schaltbares Ventil 11, das einen Ablauf 12 zu einer Getränkeausgabe 15 öffnet oder schließt.

Die Getränkeausgabe 15 ist schematisch als Sammeleinrichtung dargestellt, die einen Auslaß aufweist, unter der ein Behältnis 14, insbesondere ein Becher abgestellt ist.

Oberhalb der Einrichtung 2 zum Zuführen von Eis ist eine Eisdosiereinrichtung 16 vorgesehen, die automatisch betreibbar ist und ein oder mehrere Eiswürfel in die Einrichtung 2 abgibt. Die Eisdosiereinrichtung 16 kann dabei ein Sammelbehälter oder eine Sammeleinrichtung für Eiswürfel oder ein Aggregat zum Herstellen von Eiswürfeln sein.

Die Einrichtung 2 zum Zuführen von Eis umfasst einen Behälter, in dem eine Scheibe 17 zum Zerkleinern von Eis angeordnet ist. Die Scheibe 17 ist durch eine Welle 18 angetrieben, die über einen Motor 19 drehbar ist, wobei optional auch ein Getriebe und/oder eine Kupplungen vorgesehen sein können. An der Scheibe 17 ist ein hervorstehendes Umwälzelement 20 vorgesehen, mittels dem in dem Behälter angeordnete Eiswürfel gegen eine schematisch dargestellte Schneide 23 bewegt werden, so daß diese in zerkleinerter Form in den Sammelbehälter 9 abgegeben werden können, wie dies mit dem Pfeil 21 angedeutet ist. Die Schneide 23 ist an dem Behälter verstellbar angeordnet, so dass die Größe der zerkleinerten Eiswürfel vorgegeben werden kann. Bei einer automatischen Verstellung kann über eine Steuerung abhängig von dem ausgewählten Getränk die Größe der zerkleinerten Eisstücke ausgewählt werden.

Falls eine Ausgabe der zerkleinerten Eiswürfel in das Behältnis 14 gewünscht wird, kann ein schaltbarer Auslaß betätigt werden, um die zerkleinerten Eiswürfel direkt von der Einrichtung 2 zum Zuführen von Eis zu der Getränkeausgabe 15 zu fördern, wie dies mit der schematisch dargestellten Leitung 22 angedeutet ist.

Zur Ausgabe eines Heißgetränks wird die Brüheinheit 3 mit heißem Wasser und einem Extraktionsmittel befüllt und gibt dann über die Leitung 6 und die Leitung 13 das Brühgetränk an die Getränkeausgabe 15 ab.

Sofern die Ausgabe eines Kaltgetränks gewünscht wird, beispielsweise Eiskaffee oder Eistee, dann erfolgt eine Kühlung des Brühgetränks in dem Gerät 1, wobei hierfür gleichzeitig die Brüheinheit 3 betätigt werden kann und parallel dazu über die Eisdosiereinrichtung 16 ein oder mehrere Eiswürfel in die Einrichtung 2 zum Zuführen von Eis gegeben werden. In der Einrichtung 2 werden dann die ein oder mehrere Eiswürfel zerkleinert und in den Sammelbehälter 9 abgegeben. Im Sammelbehälter 9 wird dann das gebrühte Getränk aus der Leitung 8 zusammen mit den zerkleinerten Eiswürfeln aus der Einrichtung 2 zum Zuführen von Eis gesammelt, wobei das Ventil 11 für eine vorbestimmte Zeit, beispielsweise zwischen 10 Sekunden und 60 Sekunden verschlossen sein kann. In dieser Zeit lösen sich die zerkleinerten Eiswürfel in dem Sammelbehälter 9 auf und können das Brühgetränk auf die gewünschte Temperatur abkühlen. Nach dieser Zeitdauer wird dann das Ventil 11 über ein Stellelement geöffnet und das gekühlte Getränk kann durch die Ausgabeleitung 12 der Getränkeausgabe 15 und an dem Behältnis 14 zugeführt werden. Die Brüheinheit 3, die Einrichtung 2 zur Zuführung von Eis sowie das Ventil 11 werden dabei über eine zentrale Steuereinheit des Gerätes 1 gesteuert. Die Steuerungseinheit kann dabei ein Bedienfeld und eine Anzeige für eine Programmwahl zur Zubereitung verschiedener Getränke umfassen.

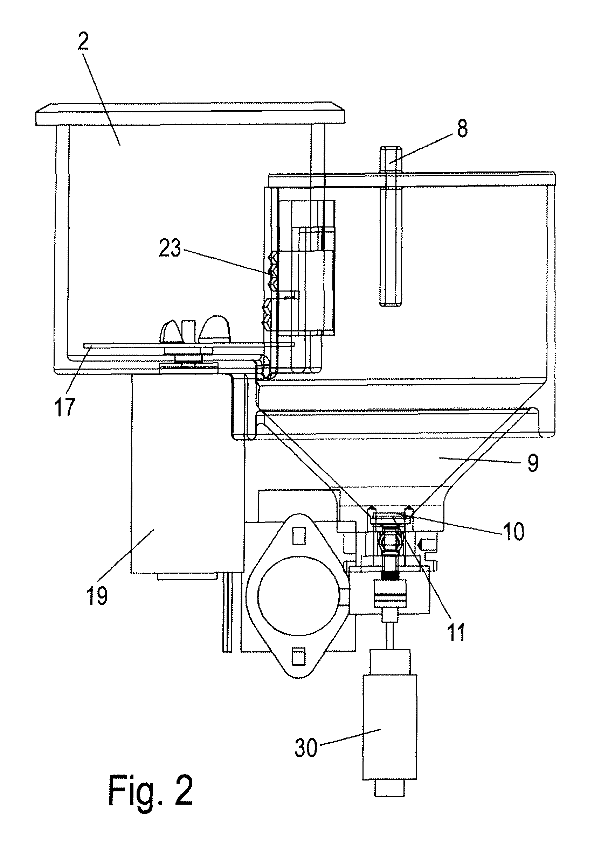

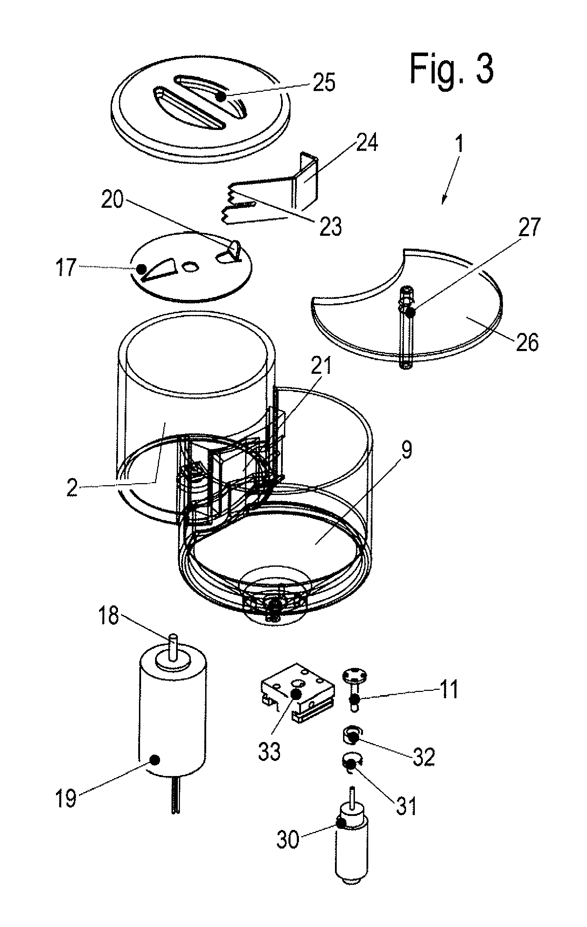

In den Fig. 2 und 3 ist die Einrichtung 2 zum Zuführen von Eis des Gerätes 1 mit weiteren Details dargestellt. Der Motor 19 treibt eine Welle 18 an, die einen Boden eines Behälters der Einrichtung 2 zum Zuführen von Eis durchgreift und dort die Scheibe 17 dreht, die ein oder mehrere Vorsprünge zur Umwälzung der Eiswürfel aufweist. An dem Behälter ist ferner eine Schneide 23 festgelegt, die integral mit einem Haltemittel 24 ausgebildet ist, das an einer Wand des Behälters montiert ist. Der Behälter der Einrichtung 2 zum Zuführen von Eis ist über einen Deckel 25 verschlossen, wobei wahlweise eine manuelle Zuführung von Eiswürfeln als auch eine automatisierte Zuführung von Eiswürfeln durch die Eisdosiereinrichtung 16 möglich ist.

Benachbart zu der Einrichtung 2 zum Zuführen von Eis ist leicht unterhalb der Sammelbehälter 9 angeordnet, so daß durch einen Auslaß 21 an dem Behälter das zerkleinerte Eis direkt in den Sammelbehälter 9 abgegeben ist. Der Sammelbehälter 9 ist ebenfalls über einen Deckel 26 verschließbar, an dem eine Zuführleitung 27 für ein Brühgetränk ausgebildet ist.

An der Unterseite des Sammelbehälters 9 ist ein Auslaß 10 vorgesehen, an dem ein Ventil 11 bewegbar angeordnet ist. Zur Bewegung des Ventils 11 ist ein Aktuator 30 vorgesehen, der über einen Stößel 31 und eine Druckscheibe 30 das Ventil 11 bewegt. Ferner ist ein Gehäuse 33 des Ventils am Auslaß 10 angeordnet.

Um die Funktionalität des Gerätes noch zu erweitern, können zudem ein oder mehrere Dosiereinrichtungen für Aromastoffe, insbesondere Sirupe, vorgesehen sein. Diese können beispielsweise im Bereich der Getränkeausgabe 15 vorgesehen sein, damit diese direkt in das Behältnis 14 dosiert werden.

## Patentansprüche

1. Gerät (1) zur Ausgabe von Getränken, insbesondere Kaffee, mit einer Brüheinheit (3), durch die heißes Wasser durch Extraktion durchleitbar ist und einer Getränkeausgabe (15), an der ein Behältnis (14) mit einem zubereiteten Getränk befüllbar ist, **gekennzeichnet durch** eine Einrichtung (2) zum Zuführen von Eis in einen Sammelbehälter (9), wobei das gebrühte Getränk **durch** den Sammelbehälter (9) mit Eis zur Getränkeausgabe (15) durchleitbar ist.

2. Gerät nach Anspruch 1, **dadurch gekennzeichnet, daß** der Sammelbehälter (9) einen Auslaß (10) aufweist, an dem ein verschließbares Ventil (11) vorgesehen ist.

3. Gerät nach Anspruch 1 oder 2, **dadurch gekennzeichnet, daß** das gebrühte Getränk von der Brüheinheit (3) wahlweise direkt zur Getränkeausgabe (15) oder über den Sammelbehälter (9) durchleitbar ist.

4. Gerät nach einem der Ansprüche 1 bis 3, **dadurch gekennzeichnet, daß** die Einrichtung (2) zum Zuführen von Eis Mittel (20) zum Zerkleinern von Eis aufweist.

5. Gerät nach einem der Ansprüche 1 bis 4, **dadurch gekennzeichnet, daß** eine automatische Eisdosiereinrichtung (16) an der Einrichtung (2) zum Zuführen von Eis vorgesehen ist.

6. Gerät nach einem der Ansprüche 1 bis 5, **dadurch gekennzeichnet, daß** die Einrichtung zum Zuführen von Eis einen Behälter umfasst, in dem eine angetriebene Scheibe zum Zerkleinern von Eis angeordnet ist.

7. Gerät nach einem der Ansprüche 1 bis 7, **dadurch gekennzeichnet, daß** die Einrichtung (2) zum Zuführen von Eis das Eis wahlweise in den Sammelbehälter (9) oder direkt in die Getränkeausgabe (15) zuführen kann.

8. Gerät nach einem der Ansprüche 1 bis 7, **dadurch gekennzeichnet, daß** eine Steuerung vorgesehen ist, mittels der verschiedene Programme zur automatischen Ausgabe von heißen oder kalten Getränken auswählbar sind.

9. Gerät nach einem der Ansprüche 1 bis 8, **dadurch gekennzeichnet, daß** der Sammelbehälter (9) trichterförmig ausgebildet ist.

10. Gerät nach einem der Ansprüche 1 bis 9, **dadurch gekennzeichnet, daß** die Einrichtung (2) zum Zuführen von Eis oberhalb des Sammelbehälters (9) und der Sammelbehälter (9) oberhalb der Getränkeausgabe (15) angeordnet ist.

11. Gerät nach einem der Ansprüche 1 bis 10, **dadurch gekennzeichnet, daß** der Sammelbehälter (9) aus dem Gerät entnehmbar angeordnet ist.
